# EUROPEAN PATENT APPLICATION

(11) **EP 0 528 050 A1**
(43) Date of publication of application: **24.02.1993**
(21) Application number: 92905993.9
(22) Date of filing: 04.03.1992
(51) Int. Cl.: C08G 65/18, C09K 19/38

(54) **SIDE CHAIN TYPE POLYMER LIQUID CRYSTAL**

(30) Priority: 05.03.1991 JP 38785/91
(71) Applicant: SUMITOMO ELECTRIC INDUSTRIES, LTD., Osaka-shi, Osaka 541 (JP); KAWAKAMI, Yuhsuke, Aichi-gun, Aichi 480-11 (JP)
(72) Inventor: KAWAKAMI, Yuhsuke, Aichi-gun, Aichi 480-11 (JP)
(74) Representative: Hansen, Bernd, Dr. Dipl.-Chem.
(86) International application number: JP9200254
(87) International publication number: WO9215631

(57) **Abstract**

A side chain type polymer liquid crystal comprising polyoxetane as the main chain and mesogenic groups as the side chain and having a high liquid crystal phase temperature range, a good long-term heat resistance and a high response speed.

## Description

### BACKGROUND OF THE INVENTION

### Field of the Invention

The present invention relates to a novel side chain liquid crystalline polymer.

### Related Art

Conventional side chain liquid crystalline polymers include a polymer of the following formula (A) in which a mesogen side chain is directly bonded to a polymer main chain and polymers of the following formulas (B) and (C) in which a mesogen chain is bonded to a polymer main chain through a spacer alkylene group with flexibility: 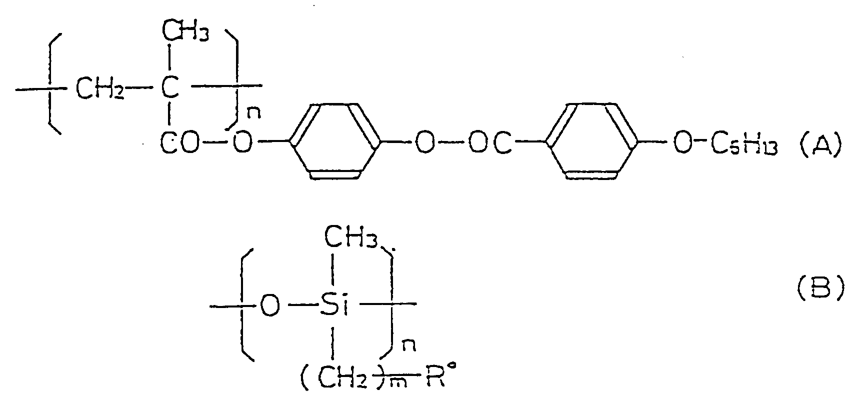 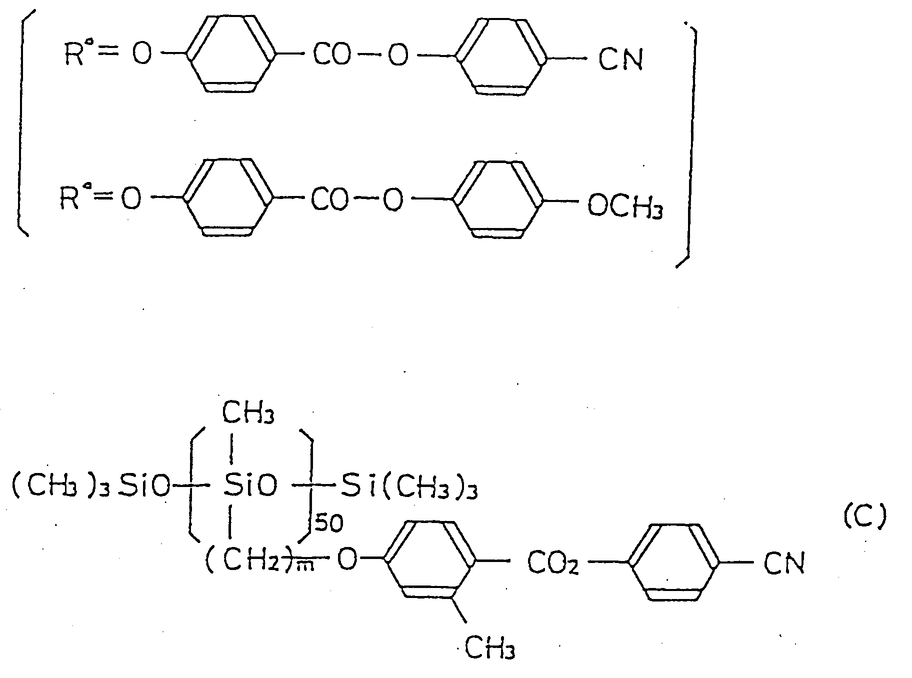
In the case of the side chain liquid crystalline polysiloxane among the conventional side chain liquid crystalline polymers, since a main chain contains the siloxane linkage -O-Si- having a low potential barrier to intramolecular rotation, a kinetic energy of the polymer chain increases and a phase transition temperature decreases. Then, liquid crystal orientation by the mesogen side chains is easily formed and a temperature range of the liquid crystalline phase decreases to a room temperature. When the liquid crystalline polysiloxane is used in a display device, a short circuit easily arises between indium tin oxide (ITO) electrodes and the display device has poor long-term thermal resistance, for example, the device is deteriorated after being used at 70°C for about 2,000 hours. In the case of the side chain liquid crystalline poly(meth)acrylate, the phase transition temperature is high and the long-term thermal resistance is good. However, when the poly(meth)acrylate is used for an electro-optical device, a response speed is low.

### SUMMARY OF THE INVENTION

An object of the present invention is to solve the above problems and provide a side chain liquid crystalline polymer which has a high phase transition temperature, accordingly a high temperature range of a liquid crystalline phase, good long-term thermal resistance and a high response speed.

To achieve this and other objects, the present invention provide a side chain liquid crystalline polymer comprising polyoxetane as a main chain and a mesogen group in a side chain.

### DETAILED DESCRIPTION OF THE INVENTION

In the liquid crystalline polymer of the present invention, the mesogen group is preferably bonded to the polyoxetane main chain through a (C₁-C₁₂) alkylene group.

The liquid crystalline polymer of the present invention has a molecular weight of usually from 500 to 1,000,000, preferably from 1,000 to 500,000.

Specific examples of the side chain liquid crystalline polymer having the polyoxetane main chain are represented by, for example, following formulas (1) and (2): 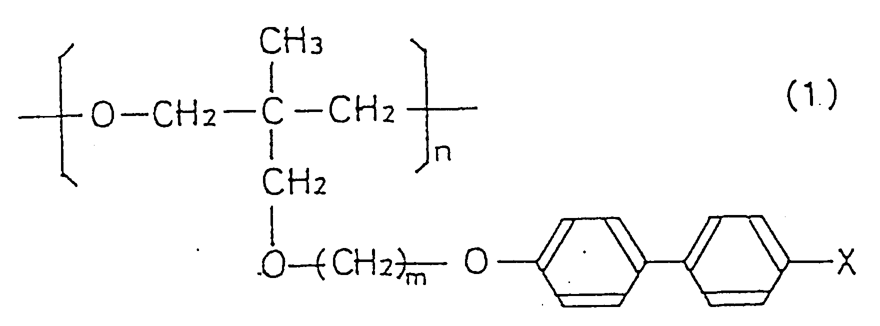
wherein X is an electron withdrawing group or an alkoxyl group, n is the number of from 2 to 2,000, and m is the number of from 1 to 12, and 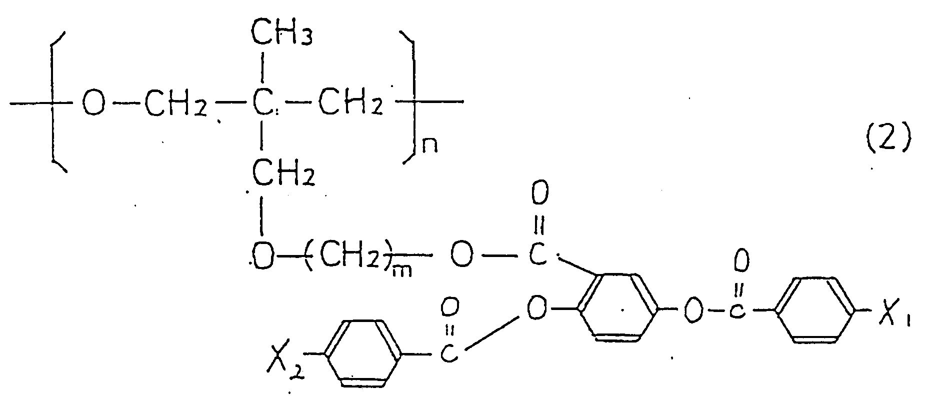
wherein X₁ and X₂ are the same or different and each an electron withdrawing group or an alkoxyl group, and n and m are the same as defined above.

Polyoxetane as the main chain is characterized in that it is difficult to induce an intramolecular rotation different from the conventional polysiloxane linkage. Further, the mesogen group may have a biphenyl structure having a substituent X in a para position instead of conventionally substituting an ester linkage on a phenyl group, so that the resultant side chain liquid crystalline polymer has a high phase transition temperature.

The substituents X, X₁ and X₂ in the formulas (1) and (2) are important to impart the liquid crystallinity. The substituents X, X₁ and X₂ each may be the electron withdrawing group or the alkoxyl group as defined above. Specific examples of the electron withdrawing group are a cyano group, a nitro group, an acyl group (such as acetyl group) and a halogen atom (F, Cl, Br and I). Specific examples of the alkoxyl group are the alkoxyl group having 1 to 12 carbon atoms such as a methoxyl group, an ethoxyl group, a propoxyl group, an isopropoxyl group, a butoxyl group, a tert.-butoxyl group, a pentyloxyl group and hexyloxyl group. Among them, a nitrile (-CN) group and a fluorine atom, which are the electron withdrawing groups, are preferably used in view of increase of the phase transition temperature of the liquid crystalline phase.

Since polyoxetane is used as the main chain in the present invention, a movement of the polymeric chain is suppressed and the phase transition temperature is raised. As the result, the temperature range of the liquid crystalline phase is made high, the long-term thermal resistance is greatly improved and the short circuit between ITO electrodes can be prevented. Further, since one mesogen group bonds to one relatively long repeating unit (having a length of four bonded atoms consisting of one oxygen atom and three carbon atoms) in polyoxetane, the interaction between adjacent mesogen groups is extremely weak and the response speed can be increased.

A monomer forming the liquid crystalline polymer of the formula (1) can be prepared, for example, in the manner indicated in following Reaction Scheme 1 or 2.

### Reaction Scheme 1

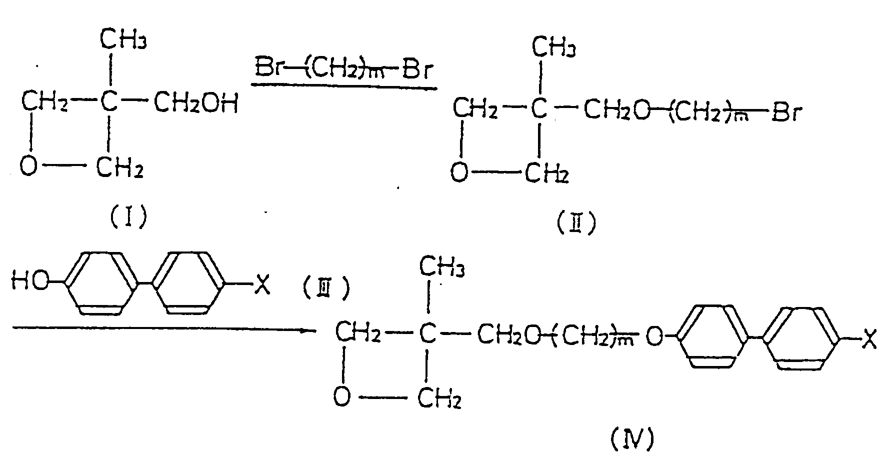

wherein X and m are the same as defined above.

Namely, 3-hydroxymethyl-3-methyloxetane (I) is reacted with the dibromoalkane to obtain 3-(ω-boromoalkoxymethyl)-3-methyloxetane (II). This reaction can be performed in the presence of a catalyst in a suitable solvent (e.g. hexane and tetrahydrofuran) containing a base (e.g. sodium hydroxide). The catalyst may be, for example, tetrabutylammonium bromide (TBAB).

Then, the compound (II) is reacted with the 4-hydroxybiphenyl derivative (III) to obtain the compound of the formula (IV). This reaction can be performed in a suitable solvent such as tetrahydrofuran to form an ether linkage after reacting the 4-hydroxybiphenyl derivative (III) with sodium hydride to prepare a sodium salt.

### Reaction Scheme 2

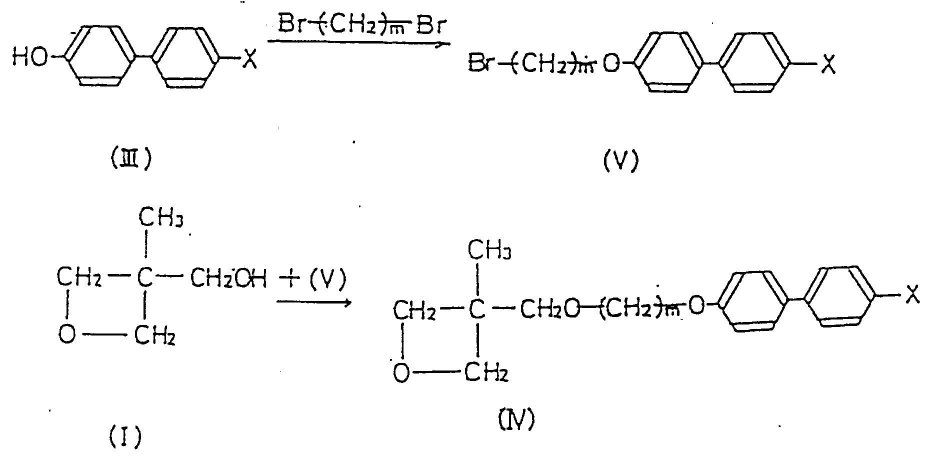

wherein X and m are the same as defined above.

Namely, the 4-hydroxybiphenyl derivative (III) is reacted with the dibromoalkane to obtain the biphenyl derivative of the formula (V). This reaction can be performed under substantially the same conditions in the same manner as in the reaction of the compound (II) with the 4-hydroxybiphenyl derivative (III) to form the ether linkage in the Reaction Scheme 1.

Then, 3-hydroxymethyl-3-methyloxetane (I) is reacted with the above product (V) to obtain the same compound (IV) as described above.

Since the resultant monomer (IV) has cationic polymerizability, it can be cationically polymerized in the presence of a BF₃-based cationic polymerization catalyst.

A monomer forming the liquid crystalline polymer of the formula (2) can be prepared, for example, in the manner indicated in following Reaction Scheme 3.

### Reaction Scheme 3

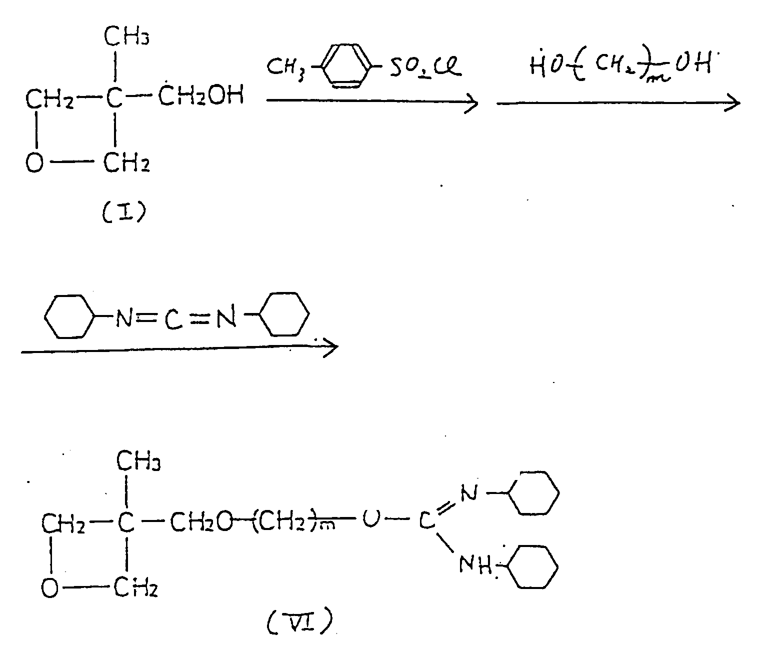

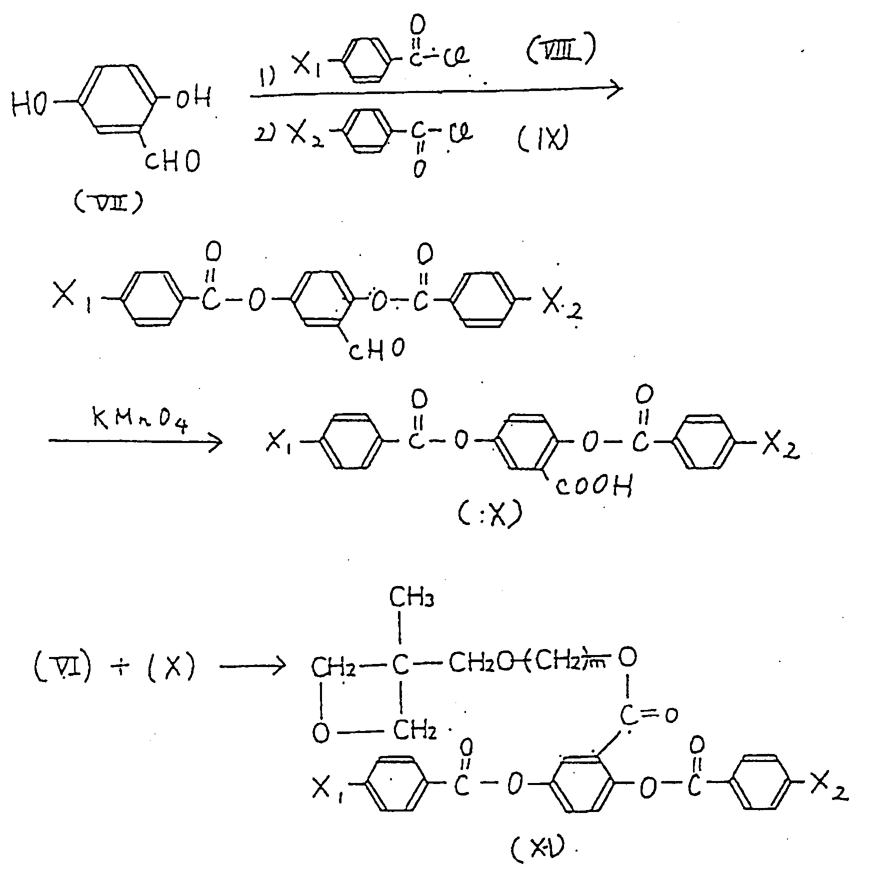

3-Hydroxymethyl-3-methyloxetane (I) is tosylated and then reacted with an excess amount of the diol in the presence of a phase transfer catalyst [such as (C₄H₉)₄NBr] to obtain 3-[ω-(hydroxyalkoxy)methyl)-3-methyloxetane. This product is reacted with dicyclohexylcarbodiimide (DCC) in the presence of a copper chloride catalyst to obtain the isourea derivative (VI). The reaction can be performed in a solvent such as tetrahydrofuran. The tosylation reaction and the reaction with the diol are preferably performed in the presence of a base (such as NaOH).

Two hydroxyl groups of 2,5-dihydroxybenzaldehyde (VII) are esterified by the successive reactions with the substituted benzoyl chlorides (VIII) and then (IX) (in the case of X₁ = X₂, one step reaction is used) in the presence of triethylamine in a solvent such as tetrahydrofuran. The remaining aldehyde group is oxidized with potassium permanganate to obtain the benzoic acid derivative (X) which is a mesogen moiety. The oxidation reaction can be performed in a solvent such as a water/acetone mixture.

Further, the isourea derivative (VI) is coupled with the benzoic acid derivative (X) to obtain the monomer (XI). This reaction can be performed in a solvent such as benzene.

The resultant monomer (XI) can be cationically polymerized with an initiator such as (C₂H₅)₃O·BF₄.

### PREFERRED EMBODIMENTS OF THE INVENTION

The side chain liquid crystalline polymer of the present invention is illustrated by following Examples which do not limit the present invention.

### Example 1

In the same manner as in the above Reaction Scheme 1 or 2, 3-hydroxymethyl-3-methyloxetane (I) was used as a starting material to prepare a monomer. Then, the monomer was cationically polymerized in the presence of a BF₃-based cationic polymerization catalyst to obtain liquid crystalline polyoxetane of the above formula (1) wherein n, m and X are indicated in Table 1.

**Table 1**

| Name of prepared polymer | Substituent X | m | Yield (%) | Mw x 10³ |
|---|---|---|---|---|
| PolyOX-1-3 | Methoxyl group | 3 | 68 | 46.8 |
| PolyOX-2-3 | Ethoxyl group | 3 | 83 | 15.5 |
| PolyOX-3-3 | Propoxyl group | 3 | 60 | 14.6 |
| PolyOX-4-3 | Butoxyl group | 3 | 70 | 24.4 |
| PolyOX-1-4 | Methoxyl group | 4 | 96 | 36 |
| PolyOX-2-4 | Ethoxyl group | 4 | 60 | 23 |
| PolyOX-3-4 | Propoxyl group | 4 | 68 | 13 |
| PolyOX-4-4 | Butoxyl group | 4 | 57 | 15 |
| PolyOX-(1-4-co-2-4) (Copolymer) | Methoxyl group | 4 | 65 | 16 |
| | Ethoxyl group | 4 | | |
| PolyOX-(3-3-co-3-4) (Copolymer) | Propoxyl group | 3 | 84 | 21 |
| | Propoxyl group | 4 | | |
| PolyOX-CN-0 | -CN | 0 | 43 | 16.6 |
| PolyOX-CN-3 | -CN | 3 | 49 | 39 |
| PolyOX-CN-4 | -CN | 4 | 38 | 85 |
| PolyOX-CN-5 | -CN | 5 | 34 | 23 |
| PolyOX-F-0 | -F | 0 | 91 | - |
| PolyOX-F-3 | -F | 3 | 92 | 16 |
| PolyOX-F-4 | -F | 4 | 99 | 46 |
| PolyOX-F-5 | -F | 5 | 88 | 29 |

The results of thermal properties and observation by a polarizing microscope of the resultant side chain liquid crystalline polymers are shown in Table 2. A glass transition temperature (Tg) and a phase transition temperature as the thermal properties were measured by a differential thermal analysis. In the name of polymer indicated in Tables 1 and 2, for example, "PolyOX-1-3" means polyoxetane (polyOX) of the formula (1) wherein the substituent X is a methoxyl group having one carbon atom and m is 3. For example, "PolyOX-(1-4-co-2-4)" means a copolymer formed by a monomer wherein the substituent X is an alkoxyl group having one carbon atom and m is 4 and a monomer wherein the substituent X is an alkoxyl group having two carbon atoms and m is 4.

In PolyOX-(1-4-co-2-4), a molar ratio of PolyOX-1-4 to PolyOX-2-4 was 50:50. In PolyOX-(3-3-co-3-4), a molar ratio of PolyOX-3-3 to PolyOX-3-4 was 50:50.

**Table 2**

| Name of prepared polymer | Differential thermal analysis (°C) | | Texture observation result by polarizing microscope |
|---|---|---|---|
| | Tg | Phase tran. temp.* | |
| PolyOX-1-3 | 103 | 115 (121) | Not observable |
| PolyOX-2-3 | Not measurable | 147 (151) | ↑ |
| PolyOX-3-3 | ↑ | 149 (154) | ↑ |
| PolyOX-4-3 | ↑ | 148 (150) | ↑ |
| PolyOX-1-4 | ↑ | 150 (140) | ↑ |
| PolyOX-2-4 | ↑ | 134 (148, 154) | ↑ |
| PolyOX-3-4 | ↑ | 111 (120, 125, 136, 146) | ↑ |
| PolyOX-4-4 | 108 | 121 (145, 151) | ↑ |
| PolyOX-(1-4-co-2-4) (Copolymer) | Not measurable | 139 (144) | ↑ |
| PolyOX-(3-3-co-3-4) (Copolymer) | ↑ | 128 (139, 146) | ↑ |
| PolyOX-CN-0 | ↑ | 96 (101) | Not observed |
| PolyOX-CN-3 | 33 | ↑ | ↑ |
| PolyOX-CN-4 | Not measurable | 84 (91) | Smectic phase |
| PolyOX-CN-5 | 16 | 95.8 (96.2) | Smectic phase |
| PolyOX-F-0 | Not measurable | 150 (154) | Not observed |
| PolyOX-F-3 | ↑ | 72 (76) | Not observable |
| PolyOX-F-4 | ↑ | 103 (104) | Smectic phase |
| PolyOX-F-5 | ↑ | 90 (91) | Smectic phase |

| | | | |
|---|---|---|---|
| Note *: In the phase transition temperature, the numbers outside parentheses indicate onset temperatures and the numbers in parentheses indicate peak values. | | | |

Table 2 shows that when the alkylene group has four or five carbon atoms and the substituent X of the mesogen group is the cyano group or the fluorine atom, the polymer exhibits particularly good smectic phase. Since the phase transition temperature is high, the polymer can be suitably used at a high ambient temperature.

### Example 2

In the same manner as in the above Reaction Scheme 3, 3-hydroxymethyl-3-methyloxetane (I) was used as a starting material to prepare a monomer. Then, the monomer was cationically polymerized in the presence of a BF₃-based cationic polymerisation catalyst to obtain liquid crystalline polyoxetane of the above formula (2) wherein m, X₁ and X₂ are indicated in Table 3.

**Table 3**

| Name of prepared polymer | m | Molecular weight* (x 10³) | Substituents | |
|---|---|---|---|---|
| | | | X₁ | X₂ |
| PolyOX-MM-3 | 3 | 28.0 | -OCH₃ | -OCH₃ |
| PolyOX-MM-4 | 4 | 40.0 | -OCH₃ | -OCH₃ |
| PolyOX-MM-5 | 5 | 52.6 | -OCH₃ | -OCH₃ |
| PolyOX-CM-5 | 5 | 30.3 | -CN | -OCH₃ |

| | | | | |
|---|---|---|---|---|
| Note *: Weight average molecular weight | | | | |

With respect to the resultant liquid crystalline polymers, thermal properties are evacuated and the textures are observed by a polarizing microscope in the same manner as in Example 1. The results are shown in Table 4.

**Table 4**

| Name of prepared polymer | Differential thermal analysis (°C) | | Texture observation result by polarizing microscope |
|---|---|---|---|
| | Tg | Phase tran. temp.** | |
| PolyOX-MM-3 | - | 62 | Nematic phase |
| PolyOX-MM-4 | 41 | 36-73 | ↑ |
| PolyOX-MM-5 | - | 40-83 | ↑ |
| PolyOX-CM-5 | - | 48-98 | ↑ |

| | | | |
|---|---|---|---|
| Note **; Ic → I | | | |

Table 4 shows that when m is from 3 to 5 and each of X₁ and X₂ is the methoxyl group or X₁ is -CN and X₂ is the methoxyl group, the polymer exhibits a good nematic phase. Since the polymer exhibits the liquid crystalline phase at a room temperature and the isotropic phase transition temperature is high, the polymer can be suitably used at a high ambient temperature.

### EFFECT OF THE INVENTION

As described above, since the side chain liquid crystalline polymer of the present invention has a high phase transition temperature, the temperature range of the liquid crystalline phase is high, the long-term thermal resistance is good and the short circuit can be prevented between the electrodes. The liquid crystalline polymer of the present invention can be suitably used as a display device for automobile which may be used at a high temperature (such as a navigation display for automobile), and a display device material for a television, an office automation equipment and the like.

## Claims

1. A side chain liquid crystalline polymer comprising polyoxetane as a main chain and a mesogen group in a side chain.

2. The liquid crystalline polymer according to claim 1, which has a molecular weight of from 500 to 1,000,000 and is represented by the formula: 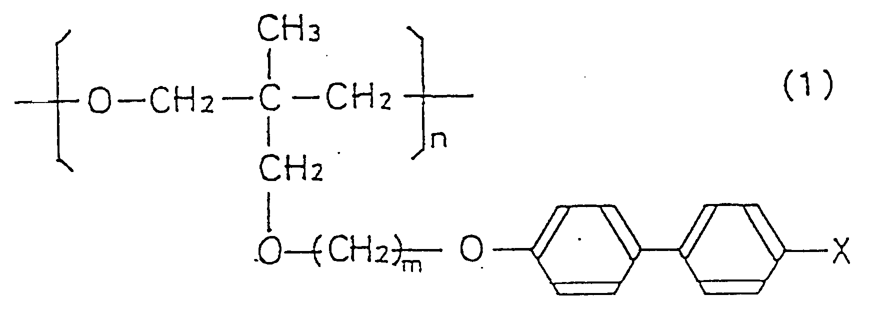 wherein X is an electron withdrawing group or an alkoxyl group, n is the number of from 2 to 2,000, and m is the number of from 1 to 12, or 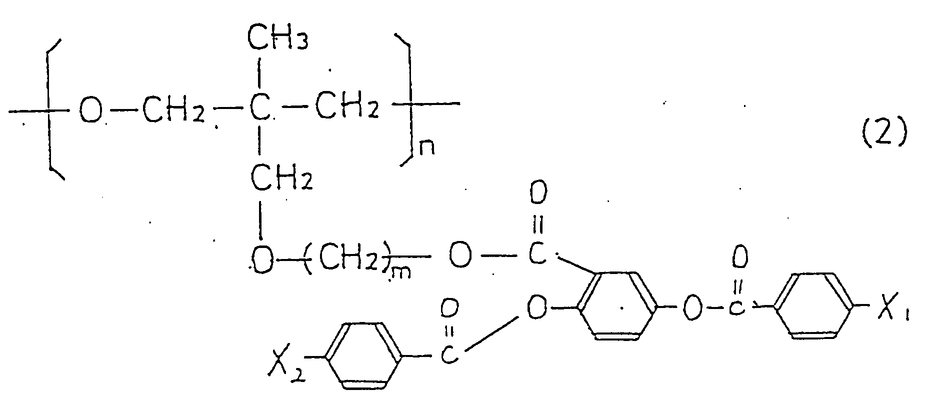 wherein X₁ and X₂ are the same or different and each an electron withdrawing group of an alkoxyl group, and n and m are the same as defined above.
